Europäisches Patentamt

European Patent Office

Office européen des brevets

(11) Publication number : **0 543 669 A1**

(12) **EUROPEAN PATENT APPLICATION**

(21) Application number : 92310642.1

(22) Date of filing : 20.11.92

(51) Int. Cl.$^5$ : **C08L 23/08**, C08L 71/03, C08L 71/00

(30) Priority : 21.11.91 JP 306162/91
13.07.92 JP 184997/92

(43) Date of publication of application :
26.05.93 Bulletin 93/21

(84) Designated Contracting States :
DE ES FR GB IT NL

(71) Applicant : SUMITOMO CHEMICAL COMPANY, LIMITED
5-33, Kitahama 4-chome Chuo-ku
Osaka (JP)

(72) Inventor : Yamamoto, Keisaku
5-3-14, Aobadai
Ichihara-shi, Chiba 299-01 (JP)
Inventor : Tanimoto, Yoshio
438-79, Johza
Sakura-shi, Chiba 285 (JP)
Inventor : Fukuyama, Masahiro
98, Daijuku
Sodegaura-shi, Chiba 299-02 (JP)
Inventor : Yasuda, Noriyasu
Room 1504 Kamiwasedaryou, 135, Iriyamazu
Ichihara-shi, Chiba 299-01 (JP)

(74) Representative : Cresswell, Thomas Anthony
J.A. Kemp & Co. 14 South Square Gray's Inn
London WC1R 5LX (GB)

(54) Rubber compositions and vulcanized rubber compositions.

(57) A rubber composition comprising 30 to 95 parts by weight of (A) an ethylene-methyl acrylate copolymer rubber, (B) 70 to 5 parts by weight (to a total of 100 parts by weight) of an epichlorohydrin-allyl glycidyl ether copolymer rubber and 1 to 10 parts by weight per 100 parts by weight of (A) and (B) of a compound containing an epoxy ring when vulcanised with an organic peroxide, has excellent oil resistance, heat resistance, low-temperature resistance and compression set.

EP 0 543 669 A1

Jouve, 18, rue Saint-Denis, 75001 PARIS

The present invention relates to a rubber composition and a vulcanized rubber composition. More particularly, the present invention provides a vulcanized rubber composition which comprises as primary components an ethylene-acrylate or ethylene-methacrylate copolymer rubber and an epichlorohydrin rubber and is excellent in properties such as oil resistance, heat resistance, low-temperature resistance and compression set.

Acrylic rubbers are known as elastomers which exhibit oil resistance. Ethylene-acrylate copolymers are known as elastomers excellent in the balance of oil resistance, heat resistance and low-temperature resistance. In addition, a technology for improving oil resistance by the use of a blend with an acrylic rubber with an ethylene-acrylate copolymer is known (Japanese KOKAI No. 92251/1989). Furthermore, the requisitions for the properties such as oil resistance, heat resistance and low-temperature resistance as well as compression set have been recently heightened too much to be satisfied.

It is an object of the present invention to provide a vulcanizable rubber composition which gives vulcanized rubber excellent in properties such as oil resistance, heat resistance, low-temperature resistance and compression set.

According to the present invention, a rubber composition is provided which comprises 30 to 95 parts by weight of the following component (A) and 70 to 5 parts by weight of the following component (B) (wherein component (A) + component (B) = 100 parts by weight) as well as 1 to 10 parts by weight of the following component (C) per 100 parts by weight of the total amount of the components (A) and (B):

component (A): an ethylene-acrylate or ethylene-methacrylate copolymer rubber,

component (B): an epichlorohydrin rubber which is vulcanizable with an organic peroxide, and

component (C): a compound containing an epoxy ring.

The present invention also provides a vulcanized rubber composition which is obtained by vulcanization of the aforementioned rubber composition with an organic peroxide.

The present invention is described in detail below.

The component (A) of the present invention is an ethylene-(meth)acrylate copolymer rubber. The term (meth)acrylate herein means an acrylate and/or a methacrylate. The (meth)acrylate is preferably an ester comprising an alcohol having 1 to 8 carbon atoms and specifically includes methyl (meth)acrylate, n-butyl (meth)acrylate, tert-butyl (meth)acrylate, 2-ethylhexyl (meth)acrylate and the like. These esters may be used alone or in combination of the two or more.

The amount ratio (molar ratio) of ethylene and (meth)acrylate is preferably in the range of 50 : 50 to 85 : 15, more preferably 50 : 50 to 70 : 30. The amount of the (meth)acrylate means the total amount of an acrylate and a methacrylate. If the copolymer has an excessive amount of ethylene, crystallinity of the copolymer increases too much to often obtain the sufficient elasticity. On the other hand, if the copolymer has an excessive amount of the (meth)acrylate, an embrittlement point of the copolymer is so high that the copolymer is hardly used as an elastic rubber at low temperature.

The ethylene-(meth)acrylate copolymer rubber of the present invention includes, in addition to the above-described copolymer rubber comprising ethylene and a (meth)acrylate, a copolymer rubber comprising ethylene, a (meth)acrylate and an epoxy group-containing monomer. The epoxy group-containing monomer perform as a crosslinking point on vulcanization. The epoxy group-containing monomer includes, for example, unsaturated glycidyl esters such as glycidyl acrylate, glycidyl methacrylate, diglycidyl itaconate, triglycidyl butenetricarboxylate, glycidyl p-styrenecarboxylate and the like and unsaturated glycidyl ethers such as vinyl glycidyl ether, allyl glycidyl ether, methacryl glycidyl ether and the like. The epoxy group-containing monomer is contained preferably in an amount of 8 molar % or less, more preferably 5 molar % or less. If the content of the monomer is too large, the copolymer rubber often degrades heat resistance and compression set. The use of an ethylene-(meth)acrylate copolymer rubber having a carboxyl group-containing monomer in place of the epoxy group-containing monomer gives poor compression set.

The (B) component of the present invention is an epichlorohydrin rubber vulcanizable with an organic peroxide. Specifically it includes, for example, an epichlorohydrin-allyl glycidyl ether copolymer, an epichlorohydrin-ethylene oxide-allyl glycidyl ether copolymer, an epichlorohydrin-propylene oxide-allyl glycidyl ether copolymer, an epichlorohydrin-ethylene oxide-propylene oxide-allyl glycidyl ether copolymer and the like.

The ratio of the component (A) and the component (B) is in the range of 30 to 95 parts by weight, preferably 40 to 70 parts by weight of the component (A) and 70 to 5 parts by weight, preferably 60 to 30 parts by weight of the component (B). If the amount of the component (A) is too small, the composition is inferior in heat resistance and compression set. On the other hand, if the amount of the component (B) is too small, the composition has poor oil resistance.

The component (C) of the present invention is an epoxy ring-containing compound. In this connection, a copolymer rubber containing ethylene, a (meth)acrylate and an epoxy group-containing monomer may be used as the component (A), as described above, while the component (C) of the present invention indicates a compound other than the copolymer rubber containing ethylene, a (meth)acrylate and an epoxy group-containing monomer. Example of the component (C) is an epoxy resin obtained by a condensation reaction of bisphenol A and epichlorohydrin. The resin preferably has an average molecular weight in the range of 300 to 15,000 and an epoxy equivalent in the range of 100 to 10,000. The term "epoxy equivalent" means an amount of a resin in grams containing 1 g equivalent of an epoxy group. An amount of the component (C) used is in the range of 1 to 10 parts by weight, preferably 3 to 6 parts by weight per 100 parts by weight of the total amount of the components (A) and (B). If the amount of the component (C) is too small, the composition causes reversion and is inferior in mechanical properties. On the other hand, the amount of the component (C) is too large, the composition degrades heat resistance.

The rubber composition of the present invention is formed into a vulcanized rubber composition by the use of an organic peroxide as a crosslinking agent. The organic peroxide is organic peroxides usually used for crosslinking of rubber such as di-tert-butyl peroxide, tert-butylcumyl peroxide, dicumyl peroxide, $\alpha$ , $\alpha$ -bis(tert-butylperoxyisopropyl)benzene, 2,5-dimethyl-2,5-di(tert-butylperoxy)hexane, 2,5-dimethyl-2,5-di (tert-butylperoxy)hexyne-3, 1,1-bis(tert-butylperoxy)-3,3,5-trimethylcyclohexane, n-butyl-4,4-bis(tert-butylperoxy)valerate, 2,2-bis(tert-butylperoxy)butane and 2,2-bis(tert-butylperoxy)octane.

An amount of the organic peroxide used is preferably in the range of 1 to 10 parts by weight, more preferably 2 to 6 parts by weight per 100 parts by weight of 100 parts by weight of the total amount of the components (A) and (B). If the amount used is smaller than the lower limit of the above-described range, the vulcanized rubber composition has a low crosslinking density and thus an insufficient mechanical strength. On the other hand, if the amount used is more than the upper limit of the above-described range, the rubber composition may cause the problem of foaming undesirably during vulcanization and forming.

In the present invention, well-known cross-linking aids such as p,p'-dibenzoylquinone dioxime, quinone dioxime, triallyl cyanurate, sulfur, ethylene dimethacrylate, N,N'-m-phenylenebismaleimide, triallyl isocyanurate, trimethylpropane trimethacrylate or the like may be used in order to improve crosslinking efficiency during crosslinking with the organic peroxide.

The process for obtaining the rubber composition and the vulcanized rubber composition of the present invention is, for example, mixing the components (A) to (C) and the organic peroxide and, if necessary, well-known compounding agents such as anti-oxidants, vulcanization accelerators, processing aids, flowers of zinc, stearic acid, reinforcing agents, fillers, softening agents and the like in a conventional kneader such as a roll or a Banbury mixer to form a vulcanizale rubber composition. The rubber composition is formed into shapes according to objects and subjected to a vulcanization process to give a vulcanized rubber composition as a final product. The vulcanization is usually carried out at a temperature of 120 °C or higher, preferably from 150 to 220 °C for about 1 to 30 minutes.

The vulcanized rubber composition of the present invention is used optimally for various applications for example, sealing materials such as a gasket, an O-ring, a packing or an oil seal, hoses, belts, rolls or the like, taking advantage of its characteristics.

The present invention is described with reference to examples and comparative examples.

Examples 1 - 7 and Comparative Examples 1 - 9

The rubber components and the compounding agents shown in Tables 1 - 2 are kneaded with a 6-inch open roll at 50 to 60°C for 15 to 20 minutes to give a vulcanizable rubber composition. The vulcanizable rubber composition is subjected to press vulcanization at 170°C for 20 minutes to give a vulcanized rubber composition. Properties of the vulcanized rubber composition thus obtained are measured in accordance with JIS-K-6301. The results are shown in Tables 3 and 4. In Comparative Example 8, no satisfactory vulcanized product is obtained due to reversion. In Comparative Example 9, no vulcanized product satisfactory in appearance and various physical properties is obtained due to excessively high vulcanization rate.

The products obtained from Examples according to the present invention are satisfactory in all of the evaluation items. On the other hand, the products obtained from Comparative Examples 1 and 2 wherein the component (B) is not used are inferior in oil resistance, and the product obtained from Comparative Example 3 exhibits inferior balance of oil resistance and low-temperature resistance. The products obtained from Comparative Examples 4 - 6 wherein the component (A) is not used are inferior in heat resistance and compression set. The product obtained from Comparative Example 7 wherein a copolymer containing a carboxyl group as a crosslinking point is used in place of the present (A) exhibits inferior compression set. In Comparative Example 8 wherein the component (C) was not used, no satisfactory vulcanized product is obtained due to reversion. In Comparative Example 9 wherein a crosslinking system comprising isocyanuric acid, octadecylammonium bromide, diphenylurea and Zisnet F (2,4,6-trimercapto-s-triazine, a crosslinking agent other than an organic peroxide) is used in place of an organic peroxide, no vulcanized product satisfactory in appearance and various physical properties is obtained due to excessively high vulcanization rate.

Table 1:   Formulation (part by weight)

|  | Example | | | | | | |
|---|---|---|---|---|---|---|---|
|  | 1 | 2 | 3 | 4 | 5 | 6 | 7 |
| Rubber component[*1] | | | | | | | |
| Component (A) kind | A1 | A1 | A1 | A1 | A1 | A2 | A1 |
| amount | 70 | 50 | 30 | 50 | 50 | 50 | 50 |
| Component (B) kind | B1 | B1 | B1 | B2 | B3 | B2 | B1 |
| amount | 30 | 50 | 70 | 50 | 50 | 50 | 50 |
| Component (C) | | | | | | | |
| Epikote 828[*2] | 5 | 5 | 5 | 5 | 5 | 5 | 5 |
| FEF Black | 40 | 40 | 40 | 40 | 40 | 40 | 40 |
| Stearic acid | 1 | 1 | 1 | 1 | 1 | 1 | 1 |
| Armine 18D[*3] | 0.5 | 0.5 | 0.5 | 0.5 | 0.5 | 0.5 | 0.5 |
| Nocrack 224[*4] | 1 | 1 | 1 | 1 | 1 | 1 | – |
| Antigene NBC[*5] | 1 | 1 | 1 | 1 | 1 | 1 | – |
| Naugard[*6] | 1 | 1 | 1 | 1 | 1 | 1 | 2 |
| DCPO[*7] | 5 | 5 | 5 | 5 | 5 | 5 | 4 |
| Sumifain BM[*8] | 0.5 | 0.5 | 0.5 | 0.5 | 0.5 | 0.5 | 0.3 |
| Isocyanuric acid | – | – | – | – | – | – | – |
| ODTMAB[*9] | – | – | – | – | – | – | – |
| Diphenylurea | – | – | – | – | – | – | – |
| Magnesium oxide | – | – | – | – | – | – | – |
| NS-200[*10] | – | – | – | – | – | – | – |
| Zisnet F[*11] | – | – | – | – | – | – | – |
| CML #21[*12] | – | – | – | – | – | – | 3 |

Table 2:  Formulation (part by weight)

| | Comparative Example | | | | | | | | |
|---|---|---|---|---|---|---|---|---|---|
| | 1 | 2 | 3 | 4 | 5 | 6 | 7 | 8 | 9 |
| Rubber component*1 | | | | | | | | | |
| Component (A) | | | | | | | | | |
|    kind | A1 | A2 | A2 | – | – | – | – | A1 | A2 |
|    amount | 100 | 100 | 50 | – | – | – | – | 50 | 50 |
| Component (B) | | | | | | | | | |
|    kind | – | – | – | B1 | B2 | B3 | B3 | B1 | B1 |
|    amount | – | – | – | 100 | 100 | 100 | 50 | 50 | 50 |
| Others kind | – | – | X1 | – | – | – | X2 | – | – |
|    amount | – | – | 50 | – | – | – | 50 | – | – |
| Component (C) | | | | | | | | | |
|   Epikote 828*2 | 5 | 5 | – | 5 | 5 | 5 | 5 | – | – |
| FEF Black | 40 | 40 | 40 | 40 | 40 | 40 | 40 | 40 | 40 |
| Stearic acid | 1 | 1 | 1 | 1 | 1 | 1 | 1 | 1 | 1 |
| Armine 18D*3 | 0.5 | 0.5 | 0.3 | 0.5 | 0.5 | 0.5 | 0.5 | 0.5 | 0.3 |
| Nocrack 224*4 | 1 | 1 | – | 1 | 1 | 1 | 1 | 1 | – |
| Antigene NBC*5 | 1 | 1 | – | 1 | 1 | 1 | 1 | 1 | 1 |
| Naugard*6 | 1 | 1 | 2 | 1 | 1 | 1 | 1 | 1 | 2 |
| DCPO*7 | 5 | 5 | – | 5 | 5 | 5 | 5 | 5 | – |
| Sumifain BM*8 | 0.5 | 0.5 | – | 0.5 | 0.5 | 0.5 | 0.5 | 0.5 | – |
| Isocyanuric acid | – | – | 0.8 | – | – | – | – | – | 0.8 |
| ODTMAB*9 | – | – | 1.5 | – | – | – | – | – | 1.5 |
| Diphenylurea | – | – | 2.3 | – | – | – | – | – | 2.3 |
| Magnesium oxide | – | – | – | – | – | – | – | – | 1.5 |
| NS-200*10 | – | – | – | – | – | – | – | – | 5 |
| Zisnet F*11 | – | – | – | – | – | – | – | – | 0.9 |

Table 3:  Evaluation of vulcanized rubber compositions

| | Example | | | | | | |
|---|---|---|---|---|---|---|---|
| | 1 | 2 | 3 | 4 | 5 | 6 | 7 |
| Tensile properties | | | | | | | |
| Tensile strength ($Kgf/cm^2$) | 123 | 129 | 130 | 129 | 92 | 117 | 129 |
| Elongation (%) | 360 | 320 | 310 | 280 | 470 | 160 | 310 |
| Hardness (JIS-A) | 53 | 55 | 55 | 57 | 47 | 61 | 56 |
| Oil resistance[13] | | | | | | | |
| Volume swell (%) | 43 | 23 | 17 | 30 | 65 | 30 | 29 |
| Low-temperature resistance | | | | | | | |
| Embrittlement temperature (°C) | -27 | -24 | -23 | -30 | -37 | -27 | -30 |
| Heat resistance[14] | | | | | | | |
| Tensile strength change | -24 | -44 | -65 | -41 | -64 | -15 | -16 |
| Elongation change (%) | 0 | -9 | -55 | -7 | -19 | -25 | -42 |
| Hardness change point | +14 | +8 | +15 | +4 | +8 | +8 | +14 |
| Compression set (%)[15] | 40 | 45 | 55 | 42 | 46 | 48 | 31 |

Table 4: Evaluation of vulcanized rubber compositions

| | Comparative Example | | | | | | |
|---|---|---|---|---|---|---|---|
| | 1 | 2 | 3 | 4 | 5 | 6 | 7 |
| **Tensile properties** | | | | | | | |
| Tensile strength $(Kgf/cm^2)$ | 103 | 111 | 120 | 133 | 126 | 75 | 89 |
| Elongation (%) | 600 | 500 | 480 | 320 | 210 | 410 | 390 |
| Hardness (JIS-A) | 50 | 49 | 59 | 56 | 60 | 43 | 50 |
| **Oil resistance[13]** | | | | | | | |
| Volume swell (%) | 73 | 73 | 37 | 10 | 10 | 77 | 66 |
| **Low-temperature resistance** | | | | | | | |
| Embrittlement temperature (°C) | -32 | -32 | -24 | -21 | -29 | -44 | -37 |
| **Heat resistance[14]** | | | | | | | |
| Tensile strength change | +8 | +42 | +19 | -88 | -81 | NM[16] | -19 |
| Elongation change (%) | -10 | -66 | -56 | -34 | -48 | NM[16] | -69 |
| Hardness change point | +22 | +30 | +13 | -4 | -3 | NM[16] | +16 |
| Compression set (%)[15] | 47 | 76 | 29 | 73 | 56 | 50 | 90 |

*1   Rubber component

A1:   Ethylene (67 molar%)-Methyl acrylate (33 molar%) copolymer rubber,

A2:   Ethylene (67 molar%)-Methyl acrylate (32 molar%)-glycidyl methacrylate (1 molar%) copolymer rubber,

B1:   Gechron 1100 (trade name), epichlorohydrin-allyl glycidyl ether copolymer rubber, manufactured by Nippon Zeon,

B2:   Gechron 3100 (trade name), epichlorohydrin-ethylene oxide-allyl glycidyl ether copolymer rubber, manufactured by Nippon Zeon,

B3:   Zeospan 303 (trade name), epichlorohydrin-propylene oxide-allyl glycidyl ether copolymer rubber manufactured by Nippon Zeon,

X1:   AR31 (trade name), ethyl acrylate-glycidyl methacrylate copolymer, manufactured by Nippon Zeon,

X2:   Vamac G (trade name), ethylene-methyl acrylate-monoethyl maleate copolymer rubber, manufactured by Du Pont,

*2   Epikote 828: Compound having an epoxy ring (Epoxy resin obtained by condensation reaction of bisphenol A and epichlorohydrin); a molecular weight of 380; an epoxy equivalent: 184 to 194), manufactured by Showa-Shell Oil

*3   Armine 180: Processing aid, manufactured by Lion-Aquzo,

*4   Nocrack 224: Anti-aging agent, manufactured by Ouchi-Shinkosha,

*5   Antigene NBC: Anti-aging agent, manufactured by Sumitomo Chemical Co., Ltd.,

*6   Naugard 445: Anti-aging agent, manufactured by Uniroyal,

*7   DCPO: Dicumylperoxide 40% by weight, organic peroxide, manufactured by Sanken-Kako,

*8   Sumifain BM, Crosslinking aid, manufactured by Sumitomo Chemical Co., Ltd.,

*9   ODTMAB:   Octadecyltrimethylammonium bromide,

*10   NS-200:   Anti-aging agent, manufactured by Nitto-Funka Kogyo,

*11   Zisnet F:   Crosslinking agent (2,4,6-trimercapto-s-triazine), manufactured by Nippon Zeon,

*12   CML #21:   Anti-aging agent (calcium oxide), manufactured by Ohmi Kagaku,

*13   Oil resistance:   JIS No. 3, oil, 150°C x 70 hours,

*14   Heat resistance:   175°C x 3 days, Deterioration according to the Geer oven method,

*15   Compression set:   150°C x 70 hours,

*16   NM:   Unmeasurable due to the embrittlement by thermal deterioration.

As described above, a vulcanized rubber composition excellent in properties such as oil resistance, heat resistance, low-temperature resistance and compression set is provided.

## Claims

1. A rubber composition comprising 30 to 95 parts by weight of component (A) and 70 to 5 parts by weight of component (B) such that component (A) and component (B) total 100 parts by weight and 1 to 10 parts by weight of component (C) per 100 parts by weight of the total amounts of components (A) and (B) wherein

   Component (A) is a copolymer rubber comprising ethylene residues and acrylate or methacrylate residues;

   Component (B) is an epichlorohydrin rubber which is vulcanizable with an organic peroxide, and component (C) is a compound containing an epoxy ring.

2. A composition according to claim 1 wherein component (A) comprises residues of an acrylate or methacrylate of an alcohol having 1 to 8 carbon atoms.

3. A composition according to claim 2 wherein component (A) comprises residues of methyl acrylate, methyl methacrylate, n-butyl acrylate, n-butyl methacrylate, tert-butyl acrylate, t-butyl methacrylate, 2-ethylhexyl acrylate or 2-ethyl-hexyl methacrylate.

4. A composition according to any one of claims 1 to 3 wherein component (A) comprises ethylene residues and acrylate or methacrylate residues in a molar ratio of 50:50 to 85:15.

5. A composition according to claim 4 wherein component (A) ethylene residues and acrylate or methacrylate residues in a molar ratio of 50:50 to 70:30.

6. A composition according to any one of claims 1 to 5 wherein component (a) is a copolymer consisting of ethylene residues and acrylate or methacrylate residues.

7. A composition according to any one of claims 1 to 5 wherein component (A) is a copolymer consisting of ethylene residues, acrylate or methacrylate residues and unsaturated glycidyl ester residues.

8. A composition according to claim 7, wherein the unsaturated glycidyl ester is selected from glycidyl acrylate, glycidyl methacrylate, diglycidyl itaconate, triglycidyl butentricarboxylate and glycidyl p-styrenecarboxylate.

9. A composition according to claim 7 or claim 8 wherein component (A) contains up to 8 molar% of unsaturated glycidyl ester residues.

10. A composition according to claim 9 wherein component (a) contains up to 5 molar% of unsaturated glycidyl ester residues.

11. A composition according to any one of claims 1 to 5 wherein component (A) is a copolymer consisting of ethylene residues, acrylate or methacrylate residues and unsaturated glycidyl ether residues.

12. A composition according to claim 11 wherein the unsaturated glycidyl ether is selected from vinyl glycidyl ether, alkyl glycidyl ether and methacryl glycidyl ether.

13. A composition according to claim 11 or claim 12 wherein component (A) contains up to 8 molar% of unsaturated glycidyl ether residues.

14. A composition according to claim 13 wherein component (A) contains up to 5 molar% of unsaturated glydicyl ether residues.

15. A rubber composition according to any one of claims 1 to 14 wherein component (B) is selected from epichlorohydrin-allyl glycidyl ether copolymers, epichlorohydrin-ethylene oxide-allyl glycidyl ether copolymers, epichlorohydrin-propylene oxide-allyl glycidyl ether copolymers and epichlorohydrin-ethylene oxide-propylene oxide-allyl glycidyl ether copolymers.

16. A composition according to any one of claims 1 to 15 comprising 30 to 95 parts by weight of component (A) and 70 to 5 parts by weight of component (B).

17. A composition according to claim 16 comprising 40 to 70 parts by weight of component (A) and 60 to 30 parts by weight of component (B).

18. A composition according to any one of claims 1 to 17 wherein component (C) is an epoxy resin having an average molecular weight of 3,000 to 15,000 and an epoxy equivalent of 100 to 10,000 obtainable by condensation reaction of bisphenol A and epichlorohydrin.

19. A composition according to any one of claims 1 to 18 comprising 3 to 6 parts by weight of component (C) per 100 parts by weight of the total amount of components (A) and (B).

20. A vulcanized rubber composition obtainable by vulcanizing a composition according to any one of claims 1 to 19 with an organic peroxide.

21. A vulcanized rubber composition obtainable by vulcanizing a composition according to any one of claims 1 to 19 with 1 to 10 parts by weight of an organic peroxide per 100 parts by weight of the total amount of the components (A) and (B).

22. A vulcanized rubber composition obtainable by vulcanizing a composition according to any one of claims 1 to 19 with 2 to 6 parts by weight of an organic peroxide per 100 parts by weight of the total amount of the components (A) and (B).

## EUROPEAN SEARCH REPORT

**European Patent Office**

Application Number

EP 92 31 0642

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CHEMICAL ABSTRACTS, vol. 111, no. 8, 1989, Columbus, Ohio, US; abstract no. 59392t, A.MAIDA ET AL. 'MIXTURES OF ACRYLIC RUBBERS AND EPICHLOROHYDRIN-PROPYLEN OXIDE RUBBERS' * abstract * & JP-A-1 074 253 (NIPPON ZEON CO., LTD.) 16 September 1987 --- | 1-17 | C08L23/08 C08L71/03 C08L71/00 |
| A | US-A-4 032 479 (Y.BUNNUMORI ET AL.) 28 June 1977 * column 4, line 46 - line 47; claim 1 * ----- | 1 | |

**TECHNICAL FIELDS SEARCHED (Int. Cl.5)**

C08L

The present search report has been drawn up for all claims

| Place of search | Date of completion of the search | Examiner |
|---|---|---|
| THE HAGUE | 11 FEBRUARY 1993 | VAN HUMBEECK F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)